# EUROPEAN PATENT APPLICATION

(11) **EP 1 417 902 A1**
(43) Date of publication of application: **12.05.2004**
(21) Application number: 03425139.7
(22) Date of filing: 04.03.2003
(51) Int. Cl.: A43B 21/28, A43B 13/20, A43B 7/08, F16K 17/04

(54) **A flow regulator adaptable to ventilating systems inside shoes**

(30) Priority: 08.11.2002 MT 179802
(71) Applicant: Yamamoto Limited, Valletta VLT05 (MT)
(72) Inventor: Buttigieg, Carmel, Santa Venera (MT)
(74) Representative: Bardini, Marco Luigi

(57) **Abstract**

A flow regulator adaptable to a ventilating system mounted inside a shoe is formed by a three-way valve (30) and by an external adapter (37). The valve (30) is joined to the pump located in the heel area of the soles, as normally used in the ventilating systems, and the adapter (37) basically permits the adjustment of the whole system to a wide number of sizes.

## Description

The present invention relates to a flow regulator for a ventilating system of a shoe.

The ventilation inside shoes is a very important argument in the shoe market. Shoe manufacturers are looking for new devices which can improve this feature, while concentrating their efforts also to the reduction of the costs.

Following these targets a lot of solutions have been proposed in the past generally addressed toward the use of the action of a pump situated in the heel area of the shoe.

When the heel is pressed to the ground during the impact phase of a step, the pump pushes the inner air to the outside of the shoe. When the heel is raised during the push-off phase, the pump sucks in air to replace the air previously exhausted out of the shoe.

The air has an one-way flow because all the presently available ventilating systems use a pump with an inlet including a one-way valve allowing air into the pump and an outlet including a one-way valve allowing air into the shoe. The prior solutions do not mention anything about a device for the adaptation of these valves to various sizes.

The most pertinent patents relating to the above subject-matter are the following:
- Pearse, UK Pat. Application - GB 2 262 024 A
- Jung, U.S. 5,068,981
- Huang, U.S. 5,341,581
- Kwon, U.S. 5,477,626
- Fukuoka, U.S. 5,505,010
- Lee, U.S. 5,515,622
- Vecchiola, U.S. 5,974,694
- Yamamoto, U.S. Serial No. 09/685121.

All these patents, as many other ones, could avoid the use of two or more one-way valves and work better using the flow regulator proposed by the present invention.

The object of the present invention is to provide an only three-way valve associated to an external adapter fit for a ventilation system inside a shoe.

The advantages of the new valve can be summarized as follows:
- lower production cost because the system adopts a single valve instead of two or more,
- lower assembling cost for the same reason,
- better sealing of the whole ventilating system because each joint of a valve represents a possible critical point for air leakage,
- only one direct flow derived from the pumping device,
- adaptability of the three-way valve with a wide range of widths of soles using its external adapter.

Other objects, features and advantages of the invention will become apparent from the following detailed description and accompanying drawings which show a nonlimiting, exemplifying embodiment thereof. In the drawings:
Fig. 1 is a side perspective view of a shoe provided with a pump in the heel area connected to two one-way valves, according the prior art;
Fig. 2 is a cross section, exploded view of the one-way valve of Fig. 1;
Fig. 3 is a cross section of a one-way valve according to Fig. 2 positioned for the expulsion of the air;
Fig. 4 is a cross section of a one-way valve according to Fig. 2 positioned for the suction of the air;
Fig. 5 is a top view of the sole portion of a shoe provided with a pumping device joined to a one-way valve for the expulsion of the air and to two one-way valves for the suction of the air inside the shoe according to the prior art;
Fig. 6 is an exploded view of a three-way valve according to the invention;
Fig. 7 is a sectional view of the assembled three-way valve of Fig. 6;
Fig. 8 is a side perspective view of a shoe provided with a pumping device comprising the three-way valve of Fig. 6 associated to an external adapter according to the invention;
Fig. 9a-9b-9c-9d are views showing the assembling operations of the three-way valve with the external adapter;
Fig. 10a-10b are views showing the air flow during the walking.

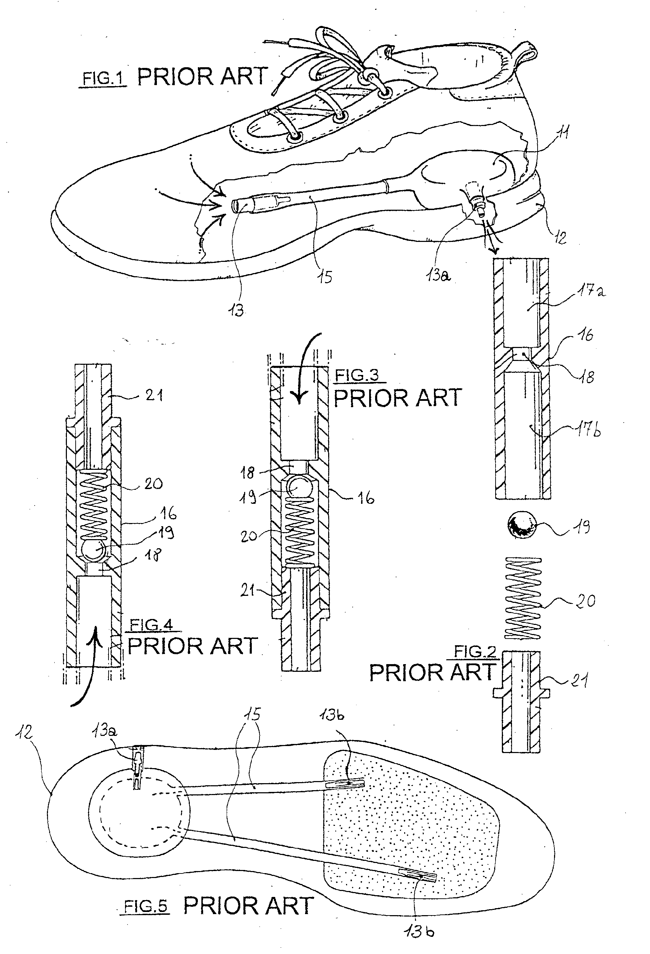

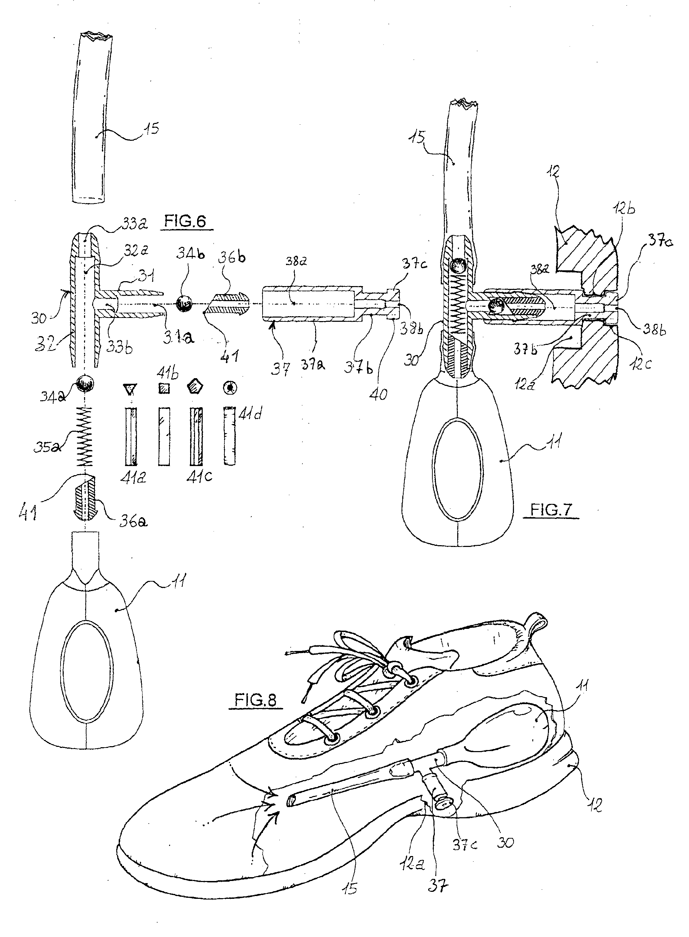

Fig. 1-2-3-4-5 show a prior art solution, where, in Fig. 1 an air pump 11 is located into the heel area of a sole 12, connected at the lateral side thereof, through a pre-formed hole, to a first one-way valve 13a inserted in the position of expulsion, as better shown in Fig.3, and at the front side to a tube 15 where a second one-way valve 13b is inserted in the position of suction, as better shown in Fig. 4. The components of a standard one-way valve are shown in Fig. 2, where a valve body 16 has an internal hole 17a-17b with a constriction 18. Into the longer part 17b of valve body 16 the following components are inserted: a ball 19, a spring 20 and a flat cap 21. Ball 19 and spring 20 are made of metal.

Fig. 5 shows the top view of a sole 12 where the pump, for a better sucking effect, has two tubes 15 with respective one-way valves 13b.

Fig. 6 shows the exploded view of a three-way valve according to the invention where a valve body 30 is formed by a main part 32 having an internal conduit 32a ending with an orifice 33a and a side part 31 having an internal conduit 31a terminating with an orifice 33b. Into internal conduit 32a of main part 32 a ball 34a, a spring 35a and a cap 36a are housed, while a ball 34b and a cap 36b are housed in side part 31. In this three-way valve the two balls 34a and 34b used are made of elastic material, such as rubber, instead of iron like the prior art. It is easy to understand that a rubber ball closes the orifice very well because its surface adheres perfectly to the edge of the orifice making a perfect sealing. Sealing in this valve, as in every pneumatic device, is the most important factor.

In the same Fig. 6 another very important component is shown: the external adapter 37. This component is designed to adapt the three-way valve to various sizes of soles, which, clearly, have different distance between the side part 31 and the edge of the sole.

The two caps 36a,b, which obviously have an internal hole, have the internal end made with an inclined spout 41 and is not flat like the other ones used in many applications of the prior art. In this case it is possible to avoid the use of the spring, specially in the lateral hole 31b, for keeping the ball in the right position. The length of this cap is projected in order to allow a very little movement of the ball which, when air is sucked, closes the hole 33b and, when air is expelled touches the cap 36 but does not close its hole because its surface is inclined 41 and the air can flow out. If this surface were flat the ball could close the hole and no air could flow.

External adapter 37 is formed by a tubular portion 37a with a central 38a for entering side part 31 of the three-way valve and a collar portion 37b for coaxially connecting tubular portion 37a to a head 37c having a smaller internal passage 38b which allows the air flow. Central passage 38a has a diameter smaller than the diameter of side part 31 in order to slide over it only with a pressure just to seal it.

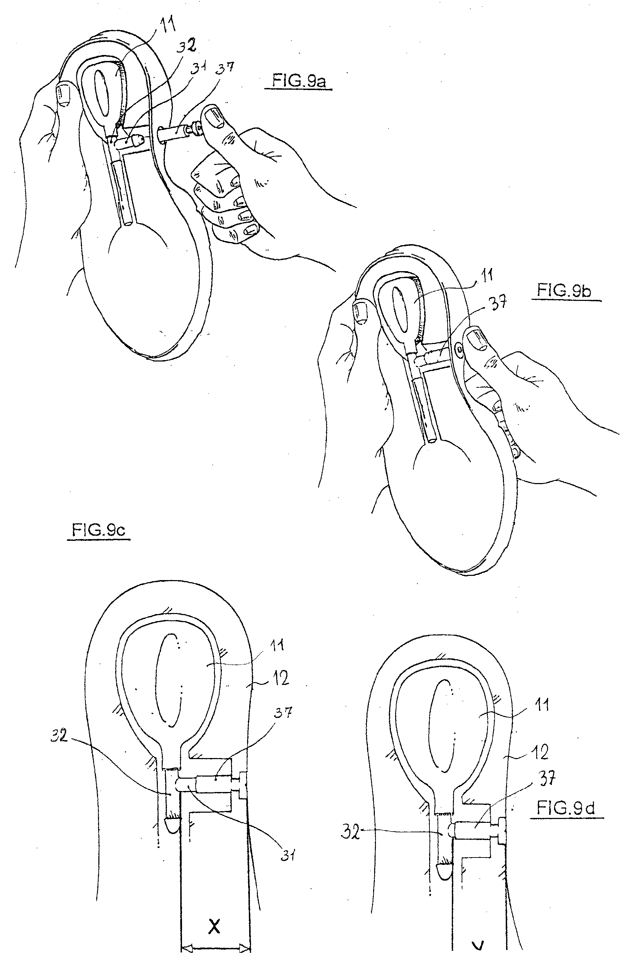

The sliding movement makes the adaptation of the whole pumping system to various sizes of soles, as shown in fig. 9a-9b-9c-9d.

The hole pre-formed into sole 12 has three diameters: the external one 12c lodges head 37c of adapter 37, the intermediate one 12b lodges collar 37b of the adapter 37 and the internal one 12a lodges tubular portion 37a of the adapter 37. Once this adapter is inserted into the sole it can not move.

Head 37c of adapter 37 may be round or elliptic in cross-section.

Spring 35a inserted into internal conduit 32a of main part 32 of the valve can be replaced by a plastic insert 41 whose length is shorter than the distance between the cap 36a, when totally inserted, and ball 34a when is touching orifice 33a. The task of the spring, like this plastic insert, is to allow a small movement of the ball for closing the mentioned orifice or for setting it open. The section of this plastic insert can be triangular 41a, square 41b, pentagonal 41c or a tube 41d, the important fact is that the air can circulate inside internal conduits 32a and 31a.

Fig. 7 shows all the components assembled and Fig. 8 when located into the heel area of a shoe. Fig. 9a-9b show the insertion of the external adapter 37 into side part 31, fig. 9c its adaptation for big sized = long distances x between the edge of sole 12 and central body 32 of the three-way valve, while fig. 9d its adaptation for small sizes = short distance y between the edge of sole 12 and main part 32 of the three-way valve.

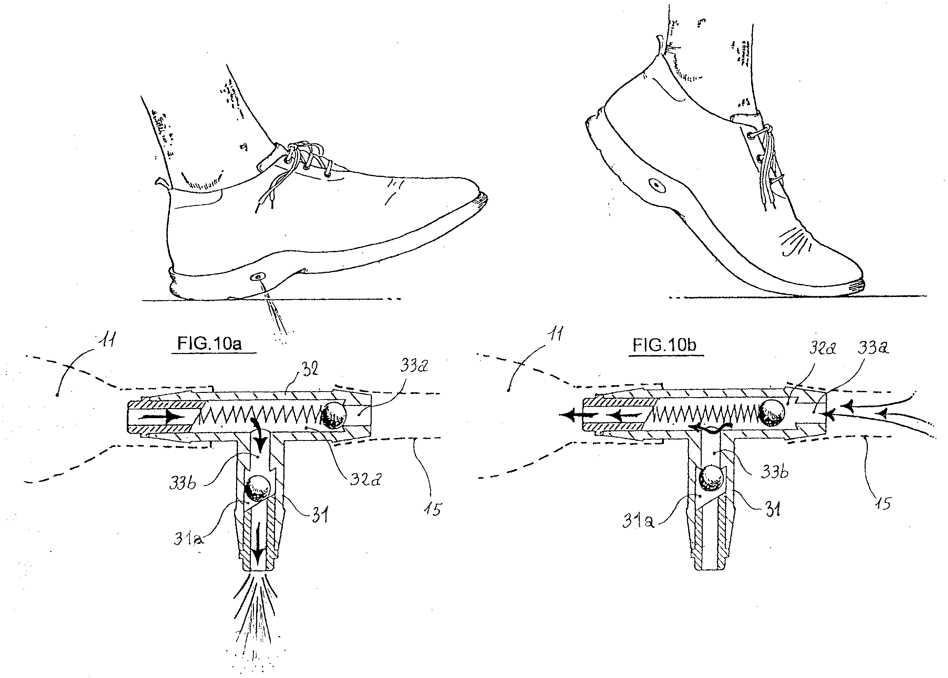

At last fig. 10a and 10b show the real effect of the three-way valve once inserted into the sole during walking.

Fig. 10a shows what happens when a foot touches the ground: pump 11 is compressed and therefore deflates pushing the air outside, this is possible because the air flow derived from the pump pushes the ball of internal conduit 32a to close orifice 33a and pushes the other ball of side part 31 to open orifice 33b leaving the air to go out freely.

Fig. 10b shows what happens when the foot raises from ground: the pump, now uncompressed, inflates and therefore sucks air within the shoe through tube 15, this being possible because through this sucking force the ball of main part 32 is moved along it, setting orifice 33a free and the ball of side part 31 is sucked thereby closing orifice 33b.

## Claims

1. A flow regulator adaptable to a ventilating system mounted inside a shoe **characterized in that** it comprises a three-way valve (30) and an external adapter (37), said three-way valve being formed by a main part (32) having an internal conduit (32a) ending with an orifice (33a), and a side part (31) having an internal conduit (31a) ending with an orifice (33b), into the internal conduit (32a) of the main part (32) a ball (34a), a spring (35a) and a cap (36a) being inserted, into the side part (31), a ball (34b) and a cap (36b) being inserted, said external adapter (37) being formed with a tubular portion (37d) with a central passage (38a) for entering the side part (31) of the three-way valve and a smaller internal passage (38b) made into its head (37c) which allows the air flow, a collar (37b) being provided to connect coaxially said head (37c) to said tubular portion (37a).

2. A flow regulator according to claim 1, wherein the central passage (38a) of the external adapter (37) has a diameter smaller than the diameter of the side part (31) of the three-way valve in order to slide over it only with a pressure just to seal it, this sliding movement making the ventilating system adaptable to various sizes of soles.

3. A flow regulator according to claim 1 or 2, wherein the shoe has a sole (12) having pre-formed hole made of three diameters: the external one (12c) lodges the head (37c) of the adapter, the intermediate one (12b) lodges the collar (37b) of the adapter and the internal one (12a) lodges the tubular portion (37a) of the adapter, said arrangement forming a joint which does not allow any movement to said head (37c).

4. A flow regulator according to anyone of the previous claims, wherein the spring (34a) inserted into the central conduit (32a) of the three-way valve is replaced by a plastic insert (41) having the same dimension and the same function.

5. A flow regulator according to anyone of the previous claims, wherein at least one of caps (36a, 36b) of the three-way valve, which obviously have an internal hole, have the internal end formed with an inclined spout (41), thus avoiding the use of a spring for keeping the ball in the right position, the caps having such a length to allow very little movements of the ball which, when is air sucked, closes the orifice (33b) and, when is air expelled, touches said cap (36) but does not close its hole because its surface is inclined and air can flow out.

6. A flow regulator, according to anyone of the previous claims, wherein the two balls (34a, 34b) of the three-way valve used for closing the orifice (33a) of the main part (32) and the orifice (33b) of the side part (31) are made of elastic material .
